# EUROPÄISCHE PATENTANMELDUNG

(11) **EP 0 571 762 A1**
(43) Veröffentlichungstag der Anmeldung: **01.12.1993**
(21) Anmeldenummer: 93106611.2
(22) Anmeldetag: 23.04.1993
(51) Int. Cl.: C01B 15/023, B01J 8/00

(54) **Verfahren zur Abtrennung katalysatorfreier Arbeitslösung aus dem Hydrierkreislauf des Anthrachinonverfahrens zur Herstellung von Wasserstoffperoxid**

(30) Priorität: 25.05.1992 DE 4217245
(71) Anmelder: DEGUSSA AG, D-60311 Frankfurt (DE)
(72) Erfinder: Eickhoff, Hubert, W-8755 Alzenau 4 (DE); Schirrmacher, Rüdiger, W-6450 Hanau (DE); Mangartz, Karlheinz, Dr., W-7888 Rheinfelden (DE); Huber, Hans-Martin, Dr., W-2816 Kirchlinteln-Hohenaverbergen (DE); Goedecke, Ralf, Dr., W-6458 Rodenbach 1 (DE)

(57) **Zusammenfassung**

Die Erfindung betrifft ein Verfahren zur Abtrennung katalysatorfreier Arbeitslösung aus Palladium-Mohr enthaltender Arbeitslösung des Hydrierkreislaufs des Anthrachinonverfahrens zur Herstellung von Wasserstoffperoxid.

Aufgabe der Erfindung war, die Abtrennung einer katalysatorfreien Arbeitslösung aus dem Pd-Mohr enthaltenden Hydrierkreislauf, welche bisher unter Verwendung von Filterkerzen erfolgte, zu verbessern, um die Verfahrenskosten abzusenken.

Gelöst wird die Aufgabe durch Verwendung eines nach dem Querstromprinzip arbeitenden Mikrofilters mit einer Filtermembran aus keramischem Material, insbesondere α-Aluminiumoxid, oder Polyolefin mit einer mittleren Porenweite im Bereich von 0,1 bis 3,0 µm; die Querstromgeschwindigkeit beträgt im allgemeinen 0,5 bis 5 m/sec.

## Beschreibung

Die Erfindung richtet sich auf ein Verfahren zur Abtrennung katalysatorfreier Arbeitslösung aus Palladium-Mohr enthaltender Arbeitslösung des Hydrierkreislaufs des Anthrachinonverfahrens zur Herstellung von Wasserstoffperoxid.

Bekanntlich wird bei dem Anthrachinonprozeß zur Herstellung von Wasserstoffperoxid, auch AO-Prozeß genannt, ein Reaktionsträger auf der Basis von einem oder mehreren 2-Alkylanthrachinonen und Tetrahydro-2-alkylanthrachinonen in einem organischen Lösungsmittelsystem in Gegenwart eines Katalysators mit Wasserstoff in die entsprechende Hydrochinonform überführt. Nach der Hydrierstufe wird die vom Katalysator befreite Arbeitslösung in der Oxidationsstufe mit einem sauerstoffhaltigen Gas behandelt, wobei sich unter Bildung von Wasserstoffperoxid die Chinonform des Reaktionsträgers zurückbildet. Schließlich wird Wasserstoffperoxid mit Wasser aus der oxidierten Arbeitslösung extrahiert und die Arbeitslösung, also das Gemisch aus dem Reaktionsträger und Lösungsmittel bzw. Lösungsmittelgemisch, in die Hydrierstufe zurückgeführt. Wesentliche Details zum AO-Prozeß sind Ullmann's Encyclopedia of Industrial Chemistry 5th ed. (1989) Vol. A 13, Seite 447-456 zu entnehmen.

Der Kreislauf der Hydrierstufe - siehe beispielsweise US-PS 4,428,923 - umfaßt im Falle der Verwendung von Suspensionskatalysatoren, wie beispielsweise Palladium-Mohr, im wesentlichen den eigentlichen Reaktor, eine Kreislaufleitung mit Kreislaufpumpe, eine Vorrichtung zur Zufuhr und Verteilung des Wasserstoffs, eine Vorrichtung zur Zufuhr von Arbeitslösung aus der der Extraktionsstufe nachgeschalteten Arbeitslösungstrocknung und eine Vorrichtung zur Entnahme katalysatorfreier hydrierter Arbeitslösung, wobei die letztgenannte Vorrichtung eine Fest-Flüssig-Trennvorrichtung einschließt.

Die quantitative und im kontinuierlichen Dauerbetrieb störungsfrei funktionierende Zurückhaltung des meist äußerst feinteiligen Suspensionskatalysators im Hydrierkreislauf während der Abtrennung des Teils der hydrierten Arbeitslösung, welcher der Oxidationsstufe zugeführt wird, ist eine Grundvoraussetzung für einen sicheren und wirtschaftlichen Prozeß. Auf diesen Teilaspekt richten sich demgemäß zahlreiche Dokumente, wobei die Fest-Flüssig-Trennung auf einer Filtration unter Verwendung von feinporigen Filtern beruht und auf der Filterfläche abgeschiedener Katalysator periodisch durch Druckumkehr ganz oder teilweise von dieser entfernt und dem Hydrierkreislauf zugeführt wird - siehe z. B. CA-PS 1 208 619, GB-PS 959 583 und US-PS 3,433,358.

Gemäß dem Verfahren der CA-PS 1 208 619 lassen sich suspendierte Hydrierkatalysatoren mit einem Teilchenspektrum von 75 % größer 1 µm unter Verwendung eines Filtermediums aus gesinterten Stahlpartikeln mit einer maximalen Porenweite von 8 µm sicher aus einer Arbeitslösung zur Herstellung von Wasserstoffperoxid abtrennen. Voraussetzung für ein einwandfreies Funktionieren der Filtervorrichtung im Dauerbetrieb ist ein in kurzen Abständen erfolgendes Rückspülen; abtrennbar sind nur Suspensionskatalysatoren mit dem vorgenannten Teilchenspektrum. Zur Abtrennung einer katalysatorfreien Arbeitslösung aus einer Edelmetall-Mohr, etwa Palladium-Mohr mit einem Primärteilchenspektrum zwischen 5 und 50 nm, enthaltenden Arbeitslösung läßt sich das vorstehend gewürdigte Verfahren nicht heranziehen - siehe Beispiel 3.

In der GB-PS 959 583 wird eine besondere Ausgestaltung des Hydrierkreislaufs des Anthrachinonverfahrens zur Herstellung von Wasserstoffperoxid offenbart. Aus der im Kreis geführten Palladiumkatalysator enthaltenen Arbeitslösung wird mittels eines Filters in einem von der katalysatorhaltigen Arbeitslösung durchströmten Filtergehäuse ein Teil der hydrierten Arbeitslösung in katalysatorfreier Form abgezogen; periodisch wird rückgespült, um die Oberfläche des Filters zumindest von teilweisem abgelagertem Katalysator zu befreien. Über das Filtermedium werden in diesen Dokument keine Angaben gemacht. Ein wesentlicher Nachteil dieses Verfahrens wird darin gesehen, daß das in dem beziehungsweise den Filtergehäusen befindliche Volumen an katalysatorhaltiger Arbeitslösung, bezogen auf das im gesamten Hydrierkreislauf befindliche Volumen, recht erheblich ist; damit ist diese Ausführungsform mit einer unerwünscht hohen Kapitalbindung belastet.

Wirksame Filtermedien zur Abtrennung trägerfreier Edelmetallkatalysatoren, wie Palladium-Mohr, sind aus der US-PS 3,433,358 bekannt. Es handelt sich hierbei um Filterkerzen aus Kohlenstoffmaterial, deren Porendurchmesser größer sein kann als der Durchmesser der abzutrennenden Teilchen und deren Wanddicke wenigstens 10 mm beträgt. Auch hier werden ein oder mehrere Filterkerzen in einem entsprechend geformten Filtergehäuse angeordnet. Es wurde zwar versucht, das Volumen in den Filtergehäusen zu minimieren, um die Kapitalbindung der in diesem Aggregat gebundenen katalysatorhaltigen Arbeitslösung zu reduzieren, jedoch sind durch die Ausgestaltung der Filterkerzen unter Aufrechterhaltung einer bestimmten Filterfläche enge Grenzen gesetzt, welche in der Praxis bereits erreicht wurden. Filterkerzen der vorgenannten Art, welche während des Betriebs periodisch rückgespült werden, finden bei der großtechnischen Produktion von Wasserstoffperoxid, etwa nach dem Verfahren der US-PS 4,428,923 Verwendung.

Im Bestreben, das Verfahren zur Herstellung von Wasserstoffperoxid nach dem Anthrachinonverfahren weiter zu verbessern, um die Kosten zu senken, besteht ein großes Interesse daran, die Vorrichtung zur Abtrennung einer katalysatorfreien Arbeitslösung aus dem Hydrierkreislauf so zu verändern, daß das in der Fest-Flüssig-Trennvorrichtung gebundene Volumen an Arbeitslösung sowie die Menge des darin enthaltenen Katalysators bei gegebener Filtrationsleistung nennenswert reduziert werden kann.

Aus der DE-OS 32 45 318 ist ein Verfahren zur kontinuierlichen Durchführung von Gas/Flüssig-Druckreaktionen mit einem im Reaktionsbereich verbleibenden suspendierenden Katalysator bekannt, wobei ein Teil der Reaktionsflüssigkeit unter Verwendung eines nach dem Querstromprinzip betriebenen Mikrofilters aus dem Reaktionsbehälter abgezogen wird. Die Mikrofilter sind mit einem Rohr-, Schlauch- oder Plattenmodul ausgestattet, wobei als geeignete Werkstoffe für den Modul Polytetrafluorethylen, Polyvinylidenfluorid und Sintermetalle genannt werden. Durch Druckumkehr zwischen der Retentat- und der Permeatseite des Mikrofilters wird periodisch rückgespült. Hinweise zur Herstellung von Wasserstoffperoxid nach dem Anthrachinonverfahren unter Verwendung äußerst feiner Edelmetallmohre lassen sich diesem Dokument ebensowenig entnehmen wie Hinweise zur Lösung der oben aufgezeigten Aufgabe der vorliegenden Erfindung. Der im Verfahren der DE-OS 32 45 318 beispielhaft eingesetzte Katalysator weist nämlich eine mittlere Korngröße um 1 µm auf, wohingegen die Primärteilchen von Palladium-Mohr im Bereich zwischen 5 und 50 nm liegen. Ein ähnliches Verfahrensprinzip wie in der DE-OS 32 45 318 liegt der DE-OS 30 40 631 zugrunde: Unter den beispielhaft genannten Katalysatoren werden auch hier die besonders feinteiligen Edelmetallmohre nicht erwähnt.

Gefunden wurde ein Verfahren zur Abtrennung katalysatorfreier Arbeitslösung aus Palladium-Mohr enthaltender Arbeitslösung des Hydrierkreislaufs des Anthrachinon-Verfahrens zur Herstellung von Wasserstoffperoxid unter Verwendung eines Mikrofiltrationsfilters, wobei der Differenzdruck zwischen Retentatraum und Permeatraum periodisch kurzzeitig umgekehrt wird, das dadurch gekennzeichnet ist, daß zur Abtrennung ein nach dem Querstromprinzip betriebenes Mikrofilter mit einer Filtermembran aus keramischem Material oder Polyolefin mit einer mittleren Porenweite im Bereich von 0,1 bis 3,0 µm verwendet wird.

Es war nicht vorhersehbar, daß mittels eines im Querstromprinzip betriebenen Mikrofilters mit einer anspruchsgemäßen Filtermembran auch im Dauerbetrieb eine vollständig katalysatorfreie Arbeitslösung aus der Palladium-Mohr enthaltenden hydrierten Arbeitslösung abgezogen werden kann. Unter Verwendung anderer Filtermaterialien läßt sich die gestellte Aufgabe gar nicht oder nicht befriedigend lösen: Sintermetallfilter aus Edelstahl mit einem Porendurchmesser von 1,4 µm sind weder ausreichend mohrdicht noch lassen sich derartige Filter befriedigend rückspülen - siehe Beispiel 3. Bei dem genannten Sintermetallfilter kommt es ferner rasch zur sogenannten Verblockung der Poren und damit einem nicht tolerablen Abfall des Permeatflusses. Um dem nicht tolerablem raschen Abfall des Permeatflusses zu begegnen, ist jedoch ein häufiger Stillstand zum Zwecke der chemischen Reinigung der Membranfilter notwendig.

Eine Filtermembran aus anderen organischen Polymeren als Polyolefinen und insbesondere Polypropylen, etwa fluorhaltigen Polymeren, können im Einzelfall zwar die geforderte Mohr-Dichtheit aufweisen, jedoch ist deren mechanische Stabilität unbefriedigend und/oder im Bereich der Schweiß- und Klebestellen zwischen der Filtermembran und anderen Kunststoffteilen des Gehäuses kommt es zu Werkstoffversagen, was zu Betriebsunterbrechungen führt.

Während der maximal zulässige Differenzdruck zwischen der Permeat- und Retentatseite im Falle einer Polypropylenmembran auf etwa 200 kPa begrenzt werden muß, lassen sich Mikrofilter mit einer Filtermembran aus einem keramischen Material auch bei wesentlich höheren Differenzdrucken betreiben. Dies ist ein entscheidender Vorteil der mit einer keramischen Membran ausgestatteten Mikrofilter, weil der spezifische Permeatfluß mit zunehmendem transmembranen Differenzdruck ansteigt. Durch Anhebung des transmembranen Differenzdrucks ist es somit möglich, bei gegebener Filtrationsleistung die erforderliche Filterfläche beziehungsweise die Anzahl der Filter, und damit das Investitionsvolumen, zu reduzieren.

Zweckmäßigerweise besteht die Filtermembran aus einem gegenüber der Arbeitslösung chemisch inerten, Arbeitslösungsbestandteile nicht adsorbierenden oxidischen keramischen Material, vorzugsweise einem solchen aus im wesentlichen α-Aluminiumoxid, wobei die Porenweite zweckmäßigerweise im Bereich zwischen 0,1 bis 1,0 µm und insbesondere 0,1 bis 0,5 µm liegt.

Das Aufbauprinzip eines Mikrofilters mit einer Filtermembran ist an sich bekannt: In einem Filtergehäuse werden ein oder mehrere Rohr-beziehungsweise Schlauch-, Platten- oder Wickelmodule, welche jeweils die wirksame Filtermembran enthalten, angeordnet; die Membranschicht befindet sich dabei auf einer grobporigen Trägerschicht aus dem gleichen oder einem anderen Material. Die Filtermodule werden in dem Gehäuse derart angeordnet, daß sie den Retentatraum vom Permeatraum trennen. Für das erfindungsgemäße Verfahren sind die sogenannten Röhrenmodule, insbesondere in ihrer Ausbildungsform als Multikanalelement, geeignet. Bei den Multikanalelementen handelt es sich um langgestreckte zylindrische Körper, welche in Längsrichtung mehrere runde oder eliptische Kanäle aufweisen. Der Formkörper an sich besteht aus porösem Material, vorzugsweise Oxidkeramik, insbesondere solcher auf der Basis von α-Aluminiumoxid. Auf der Wandung der Kanäle befindet sich die eigentliche Filtermembran. Der Durchmesser der Kanäle liegt üblicherweise im Bereich zwischen 1 und 10 mm. Im erfindungsgemäßen Verfahren sind Multikanalelemente mit einem Kanaldurchmesser zwischen 2 und 6 mm besonders gut geeignet.
Konstruktionsbedingt wird auf diese Weise eine große Filterfläche auf engem Raum konzentriert. Auf diese Weise ist es möglich, eine große Filterfläche und damit eine große Filterleistung auf engem Raum unterzubringen. In dem anspruchsgemäßen Verfahren ist der dargestellte Vorteil von großer Bedeutung, da sich hiermit das Investitionsvolumen und der Platzbedarf innerhalb einer Anlage wesentlich reduzieren lassen.

Wie bereits oben ausgeführt, kommen im vorbekannten Verfahren Filterkerzen zum Einsatz. Um die erforderliche Stabilität sowie Filterleistung zu erbringen, weisen derartige Filterkerzen einen um ein vielfaches größeren inneren Durchmesser auf; gegenüber der erfindungsgemäßen Filtervorrichtung machen die vorbekannten Filterkerzen damit wesentlich größere Filtergehäuse erforderlich. Gleichzeitig ist das Volumen der Kanäle der erfindungsgemäßen Filterelemente, durch welche die palladiumhaltige Arbeitslösung strömt, wesentlich geringer als das entsprechende Volumen innerhalb des Filtergehäuses für die Filterkerzen. Der Wechsel von den vorbekannten Filterkerzen zu den erfindungsgemäßen Filterelementen erlaubt damit auch eine deutliche Reduzierung des "hold-up" an Arbeitslösung und Palladium - siehe Beispiel 4.

Die Strömungsgeschwindigkeit der palladiumhaltigen Arbeitslösung quer zur Filtrationsrichtung wird im allgemeinen auf Werte zwischen 0,5 und 5 m/s eingestellt, wobei eine Strömungsgeschwindigkeit zwischen 1 und 2 m/s bevorzugt wird. Aufgrund dieser unerwartet niedrigen Strömungsgeschwindigkeiten ist der Druckverlust und damit der spezifische Energiebedarf im erfindungsgemäßen Verfahren gering. Bei der Filtration herrscht auf der Retentatseite der Druck des Hydrierkreislaufs; die Druckdifferenz zur Permeatseite hin wird größer als Null und kleiner als der Druck auf der Retentatseite sein. Im erfindungsgemäßen Verfahren wird der transmembrane Differenzdruck vorzugsweise größer als 200 und kleiner als 500 kPa sein. Unter Verwendung der bevorzugten Filterelemente mit einer Membran aus α-Aluminiumoxid steigt der spezifische Permeatfluß linear mit zunehmender transmembraner Druckdifferenz in einem weiten Bereich an - siehe Beispiel 1.

Zum Zwecke der Rückspülung wird der Druck zwischen der Retentat- und der Permeatseite umgekehrt, um einen konstant hohen Mittelwert des Permeatflusses aufrechtzuerhalten. Mikrofilter mit einer erfindungsgemäßen Filtermembran zeichnen sich durch eine gute Rückspülbarkeit sowie im Zyklusmittel hohe spezifische Flüsse aus. Überraschenderweise, und dies ist ein weiterer Vorteil des erfindungsgemäßen Verfahrens, ist der spezifische Permeatfluß (m³/h und m²) wesentlich größer als im Falle der Filtration mittels der vorbekannten Filterkerzen. Es ist somit möglich, die installierte Filterfläche im erfindungsgemäßen Verfahren gegenüber dem vorbekannten Verfahren zu reduzieren. Ein weiterer Vorteil des erfindungsgemäßen Verfahrens besteht darin, daß auch nach langer Betriebsdauer weder in den Filtergehäusen noch in den Filterelementen Katalysatorablagerungen auftreten.

Die erfindungsgemäßen Maßnahmen zum Abtrennen einer katalysatorfreien Arbeitslösung aus einer Suspensionskatalysatoren enthaltenden hydrierten Arbeitslösung lassen sich in allen bekannten AO-Verfahren unter Verwendung von Palladium-Mohr sehr gut realisieren. Zur Durchführung der Hydrierstufe sowie geeignete Vorrichtungen hierzu wird auf die US-PS 4,428,923 sowie die darin zitierte US-PS 3,423,176 und ferner auf die DE-OS 40 29 784 hingewiesen. Die Erfindung wird anhand der nachstehenden Beispiele und Vergleichsbeispiele weiter verdeutlicht.

### Beispiele 1 bis 3

Untersuchung der Wirksamkeit unterschiedlicher Filtermodule zur Abtrennung katalysatorfreier Arbeitslösung aus Pd-Mohr enthaltender Arbeitslösung:
In einer Technikumsapparatur wurde palladiumhaltige Arbeitslösung mittels einer Pumpe durch den nach dem Querstromprinzip betriebenen Filtrationsmodul über einen Behälter B1 im Kreis geführt. Das über das Filtermedium in den Mantelraum des Moduls tretende Permeat wird über einen Behälter B2 und ein Sicherheitsfilter ebenfalls zurück in den Behälter B1 geführt. Die Rückspülung erfolgt aus dem Behälter B2. Für die Versuche wurde eine Arbeitslösung auf der Basis von im wesentlichen einem aromatischen Kohlenwasserstoff mit einem Siedebereich von 185 bis 205 ^{o}C und Tetrabutylharnstoff als Lösungsmittel und einem Gemisch aus 2-Ethylanthrachinon sowie 2-Ethyltetrahydroanthrachinonen als Reaktionsträger eingesetzt. Der Pd-Gehalt im Kreislauf wurde auf etwa 2 g/l eingestellt.

### Beispiel 1

In der vorgenannten Anlage wurden handelsübliche Keramik-Filterelemente in Multikanalbauweise mit einem Lumendurchmesser der Kanäle von etwa 3 mm eingesetzt: Filtermembran aus im wesentlichen α-Aluminiumoxid (99,95 %); mittlere Porenweite etwa 0,2 µm; Porenvolumen 30 %; Dicke der Membran 8 bis 12 µm; Filterfläche 0,44 m². Trägermaterial (Stützkörper) α-Aluminiumoxid, Porenweite 7 bis 11 µm, Porenvolumen ca. 30 %.

Wie aus der Tabelle 1 folgt, nimmt der spezifische Permeatfluß mit zunehmender mittlerer transmembraner Druckdifferenz zu (Messung unmittelbar nach der Rückspülung). Der Einfluß der Querströmungsgeschwindigkeit ist bis zu einem transmembranen Differenzdruck von etwa 400 kPa gering.

**Tabelle 1**

| mittlere transmembrane Druckdifferenz kPa | spezifischer Permeatfluß (l/m²h) | |
|---|---|---|
| | Querstrom 1,5 m³/h | Querstrom 3 m³/h |
| 40 | | 180 |
| 100 | 580 | 580 |
| 140 | 820 | |
| 170 | | 1140 |
| 250 | 1540 | |
| 270 | | 1700 |
| 350 | | 2380 |
| 360 | 2340 | |
| 425 | 2560 | |
| 500 | | 3220 |
| 570 | 2980 | 3430 |

Der Modul ist mohrdicht. Eine Rückspülung ist erforderlich, um im Mittel einen konstanten Permeatfluß aufrechtzuerhalten. Eine Rückspülzeit von 10 sec bei einer Filtrationszeit von 10 Minuten reicht zur Aufrechterhaltung des gewünschten mittleren Permeatflusses über einen langen Betriebszeitraum aus.

### Beispiel 2

Eingesetzt wurden ein Filtermodul mit einer mit 43 Filterschläuchen mit einer Filtermembran aus Polypropylen in einem Stützrohr aus Edelstahl; Porengröße der Membran 0.2 µm; Filterfläche 1 m²; Querstromgeschwindigkeit 1 m/s.

Die Membran erwies sich als mohrdicht und gut rückspülbar. Der Permeatfluß steigt im zulässigen Druckbereich (bis max. 200 kPa) linear und weitgehend unabhängig von der Querstromgeschwindigkeit an und beträgt bei 150 kPa transmembraner Druckdifferenz 750 l/m²h.

### Beispiel 3 (nicht erfindungsgemäß)

Eingesetzt wurde ein Sintermetallfilter mit einer Porenweite von 1,4 µm aus Edelstahl; Filterfläche 0,1 m². Untersucht wurde der Permeatfluß in Abhängigkeit von der Filtrationszeit, wobei folgende Zykluszeiten eingehalten wurden:
Filtration 300 s, Entspannung 1,5 s, Rückspülung 15 s. Umwälzmenge 6,5 m³/h, Druck vor dem Filter 400 kPa, nach dem Filter 100 kPa.

Das Filter erwies sich nicht als mohrdicht. Zudem sinkt der Permeatfluß innerhalb der ersten 12 Zyklen um mehr als 50 % des Ausgangswert ab. Die Verblockung des Filterelements läßt sich also durch Rückspülung nicht beheben.

### Beispiel 4

In einem Betrieb zur Herstellung von Wasserstoffperoxid nach dem AO-Verfahren sind zur Abtrennung Pd-Mohr-freier Arbeitslösung aus dem Hydrierkreislauf gemäß US-PS 4,428,923 Filterkerzen in einem Filtergehäuse gemäß US-PS 3,433,358 eingebaut. Durch Austausch dieser Filtervorrichtung durch eine erfindungsgemäße Filtervorrichtung mit Filterelementen gemäß Beispiel 1 ergeben sich bei unverändertem Vorwärtsfluß (=Permeatmenge/h) wesentliche Vorteile, welche nachfolgend in Relation zu den Werten des Standes der Technik aufgelistet sind:

| | |
|---|---|
| Spezifischer Permeatfluß: | vergrößert um dem Faktor 1,6 |
| Filterfläche: | reduziert um etwa 40 % |
| Volumen Arbeitslösung in den insgesamt erforderlichen Filtergehäusen: | reduziert um 89 % |
| In der in der Filtervorrichtung insgesamt gebundene Menge Palladium (in der Suspension und auf der Filterfläche): | reduziert um 93 % |

### Beispiel 5

In einer Produktionsanlage zur Herstellung von Wasserstoffperoxid wurde im by-pass das erfindungsgemäße Verfahren über einen Zeitraum von 4 Wochen unter folgenden Bedingungen betrieben:

| | |
|---|---|
| Membranfläche: | 3,1 m² |
| Membranmaterial: | α-Al₂O₃, Porenwerte ca. 0,2 µm |
| Filtratleistung: | 5,9 m³/h |
| transmembrane Druckdifferenz: | 240 kPa |
| Querstromgeschwindigkeit: | 1.85 m/s |
| Filtrationszeit zu Rückspülzeit: | 300 s / 10 s |

Es treten keine Betriebsstörungen auf. Bei der anschließenden Inspektion wurden weder im Filtergehäuse noch in den Filterelementen Katalysatorablagerungen festgestellt.

## Patentansprüche

1. Verfahren zur Abtrennung katalysatorfreier Arbeitslösung aus Palladium-Mohr enthaltender Arbeitslösung des Hydrierkreislaufs des Anthrachinon-Verfahrens zur Herstellung von Wasserstoffperoxid unter Verwendung eines Mikrofiltrationsfilters, wobei der Differenzdruck zwischen Retentatraum und Permeatraum periodisch kurzzeitig umgekehrt wird,
dadurch gekennzeichnet,
daß zur Abtrennung ein nach dem Querstromprinzip betriebenes Mikrofilter mit einer Filtermembran aus keramischem Material oder Polyolefin mit einer mittleren Porenweite im Bereich von 0,1 bis 3,0 µm verwendet wird.

2. Verfahren nach Anspruch 1,
dadurch gekennzeichnet,
daß die Membran aus im wesentlichen α-Aluminiumoxid besteht und die mittlere Porenweite im Bereich von 0,1 bis 1,0 µm, insbesondere 0,1 bis 0,5 µm, liegt.

3. Verfahren nach Anspruch 1 oder 2,
dadurch gekennzeichnet,
daß die Strömungsgeschwindigkeit quer zur Filtrationsrichtung zwischen 0,5 und 5 m/sec beträgt.
